# EUROPEAN PATENT SPECIFICATION

(11) **EP 1 826 148 B1**
(45) Date of publication and mention of the grant of the patent: **26.05.2010**
(21) Application number: 06003975.7
(22) Date of filing: 27.02.2006
(51) Int. Cl.: B65D 85/804, A47J 31/40

(54) **Beverage-ingredient capsule with jet direction-diverting member**
Kapsel mit Getränkezubereitung mit integralem Element zur allseitigen Umlenkung des Aufgussdruckstrahls
Capsule filtrante renfermant une substance de préparation pour boisson comportant des moyens pour dévier la direction du jet.

(43) Date of publication of application: 29.08.2007
(73) Proprietor: Nestec S.A., 1800 Vevey (CH)
(72) Inventor: Jarisch, Christian, 1094 Paudex (CH); Denisart, Jean-Luc, 1096 Cully (CH); Denisart, Jean-Paul, 1093 La Conversion (CH); Colantonio, Jean-Luc, 1470 Estavayer-le-Lac (CH)
(74) Representative: Rupp, Christian

(56) References cited:
- EP-A- 1 344 722
- EP-A- 1 398 279
- WO-A-2004/078009
- WO-A-2005/066040
- WO-A-2006/005755
- WO-A-2006/043096
- US-A- 2 778 739

## Description

The present invention relates to capsules for containing ingredients, wherein a beverage or liquid comestible can be produced from the ingredient contained in the capsule by having a liquid such as for example hot water under pressure interact with the ingredient.

The invention furthermore relates to beverage production devices designed for producing a beverage or liquid comestible by injecting a liquid into an ingredient-containing capsule.

Finally, the invention also relates to methods for producing a beverage from an ingredient-containing capsule.

Certain beverage systems using beverage-ingredient containing capsules are popular for the quality of the beverage delivered and the convenience and ease of preparation. A typical example is the production of coffee by using a sealed, ground coffee-powder containing capsule in combination with a matching coffee machine.

The invention especially relates to the use of capsules which are filled with the ingredient and then sealed at the manufacture side. Such capsules can then be inserted into the beverage-producing machine (e.g. the coffee machine) without the necessity that the user has to open at least one face of the capsule. According to this known technology the opening of an inlet side and an outlet (draining) side of the capsule is carried out in an automated fashion in the machine itself after the insertion of the capsule into the beverage-producing machine.

Several examples are known for technologies in which mechanical perforating means penetrate into the inlet side and the outlet side of the capsule to create such inlet and draining openings.

Other examples use mechanical perforation means for the opening of the capsule at the inlet side only. Once the inlet side is opened, water under pressure is injected into the capsule and the pressure inside the capsule increases until the inner pressure causes the outlet side of the capsule to open, perforate or rupture. The opening of the draining side of the capsule can be assisted by pressing the outlet side of the capsule e.g. against dedicated mechanical opening means.

US 2 778 739 discloses a sealed capsule according to the preamble of claim 1, having a jet direction-diverting element attached to and covering the entire surface of the lower wall of the capsule. The element comprises a central frusto-conical projection which extends inwardly into the capsule from the element, and which is provided with lateral openings. If water is injected from the bottom of this capsule, the direction of the jet of water will be diverted through the lateral openings of the frusto-conical projection. The element is further covered with a sheet of a filter material.

WO 2005/066040 A2 teaches a capsule and a method for the preparation of beverages in which the wall of the sealed capsule comprises a first weakened area suitable to be perforated by a pressurized liquid acting upon the outside of said capsule, and a second area suitable to be caused to break through the effect of the pressure exerted thereupon by the beverage present with in the capsule.

While the introduction of external perforation means into the capsule add more complexity and can cause problems (scale, contamination of the external perforation members of the beverage-production machine by the ingredients contained in the capsule etc.), the technology as proposed in WO 2005/066040 a weakened area of the capsule associated to the injection pressure does not constitute a reliable opening mode. Furthermore, this solution cannot inject water in the proper direction in the capsule to wet, extract and/or dissolve the entire mass of ingredient.

EP1344722 shows a beverage-ingredient containing capsule having rigid internal filter plates, which filter plates are provided with corrugations which serve to define, together with the adjacent face of the capsule wall, channels for distributing and collecting liquid at the water inlet side and the water outlet side, respectively, of the capsule. In order to guarantee this distribution and collection effect, the filter plates defining the channels have to extend over the total surface of the ingredient volume.

Therefore, there is no existing solution for both removing complexity in the machine and problems related to water injection while properly carrying out the injection of water in the capsule.

It is therefore the object of the present invention to provide for a technology that meets these needs.

Generally it is the idea to incorporate water-jet forming means into the capsule itself such that these water-jet forming means are only used once in connection with the associated capsule. According to the general idea of the invention the water-jet forming means can be internal mechanical members of the capsule which assist in
- producing an opening for the water jet , and/or
- redirecting (diverting) the direction of the water jet once it has passed the opening of the capsule.

The object is preferably achieved by means of the features of the independent claim. The dependent claims develop further the central idea of the present invention.

According to the invention a sealed capsule containing an ingredient is provided. The capsule is provided with at least one inner jet direction-diverting member being arranged adjacent to the inner surface of a face of the capsule. The inner jet direction-diverting member is designed to divert the direction of at least a portion of a water jet injected through an opening produced in the face of the capsule.

The jet direction-diverting member can be designed to divert the water jet into several, preferably radial jets.

The jet direction-diverting member can comprise an essentially cup-like main body.

The jet direction-diverting member can comprise radial openings, slits or channels in a wall of the cup-like main body and/or the rim of the cup-like main body.

The capsule can be provided with at least two jet direction-diverting members, which are arranged symmetrically in the capsule and respectively close to the inner surface of one face of the capsule. This arrangement has the advantage that the capsule can be placed for preparation in two possible positions since the design of the inlet and outlet sides are symmetrical. Therefore the two opposing faces of the capsule can be used indifferently as the inlet side or the outlet side.

At least one direction-diverting member can be provided with an inner perforation member designed to assist in producing an opening in the face of the capsule.

At least one direction-diverting member can occupy a smaller surface than the entire inner surface of the associated face. The surface occupied should be as small as possible to minimize the resulting forces on the capsule holder but large enough to enable the deformation of the capsule surface for opening (e.g., puncturing). For example, the at least one direction-diverting member can occupy less than 1/16 of the inner surface of the face. For example, the direction-diverting member can have a larger width (e.g., a diameter) of less than about 2 cm, even less than 1.5 cm.

A filter is placed close the inner surface of the face of the capsule, preferably in the region of the face which is not covered by the direction-diverting member.

The direction-diverting member can be inserted between the filter and the surface of the wall in the region occupied by the direction-diverting member.

A compacted ingredient or other suitable means can maintain at least one direction-diverting member in a defined position adjacent to the inner surface of the associated face of the capsule.

Also described herein is a beverage-ingredient containing capsule being provided with at least one inner perforation member positioned adjacent to a face of the capsule and designed to assist in producing an opening in the face of the capsule when the face is thrust against the inner perforation member by external forces, which can be e.g. hydrodynamic or mechanical forces.

Further described herein is a beverage production device designed for producing a beverage or liquid comestible by injecting a liquid into an ingredient-containing capsule. The device is provided with an enclosing member for at least partially enclosing the capsule. The enclosing member has recessed and/or protruding profiling means for creating inner flow channels in at least one face of the capsule by deforming the face of the capsule when the interior of the capsule is pressurized by injecting water.

The profiling means are preferably oriented in a radial manner.

When the enclosing member engages the beverage capsule, the profiling means preferably is so configured that they run from the vicinity of the direction-diverting member toward the periphery of the beverage capsule.

Yet further described herein is a beverage capsule system comprising a capsule as defined above as well as a beverage production device designed for producing a beverage by injecting a liquid into the capsule and draining a thus produced beverage from the capsule. The device can be provided with an enclosing member for at least partially enclosing the capsule. The enclosing member can have recessed and/or protruding profiling means for creating inner flow channels in at least one face of the capsule when the interior of the capsule is pressurized when injecting water.

The enclosing member can comprise water injection means which are configured to deliver water in the capsule through the inner jet direction-diverting member.

The water injection means can be free of perforation means for opening the wall of the capsule.

The beverage production device can comprise a capsule holder for supporting the capsule, wherein the capsule holder can be designed to selectively cooperate with an enclosing member such that a supported capsule is tightly enclosed.

The capsule holder can comprise at least one protruding element adapted to tear or pierce a face of the capsule for releasing a produced beverage. The protruding element can be placed in a laterally offset position relative to the position of the inner jet direction-diverting member when the capsule is placed in tight engagement between the enclosing member the capsule holder.

The capsule holder can comprise a plurality of relief elements placed around the direction-diverting member.

Also described herein is a method for producing beverage from an ingredient-containing capsule. At first a capsule is inserted in an enclosing member. Then liquid under pressure is injected into the capsule. Inner channels are dynamically profiled in at least one face of the capsule by pressing the face of the capsule against profiling means of the enclosing member, in order to dynamically produce at least one inner liquid distribution channel in at least one face of the capsule.

Further advantages, objects and features will now become evident by means of the detailed description of a preferred embodiment of the present invention when taking in conjunction with the figures of the enclosed drawings.
Fig. 1 shows an overview of a capsule inserted in tight engagement between a capsule holder and an enclosing member of a beverage-producing machine.
Fig. 2 shows an enclosing member which can be used in connection with the present invention,
Fig. 3 shows different views of a capsule according to the present invention,
Fig. 4 shows a detail of the present invention, which are the jet-direction diverting members.

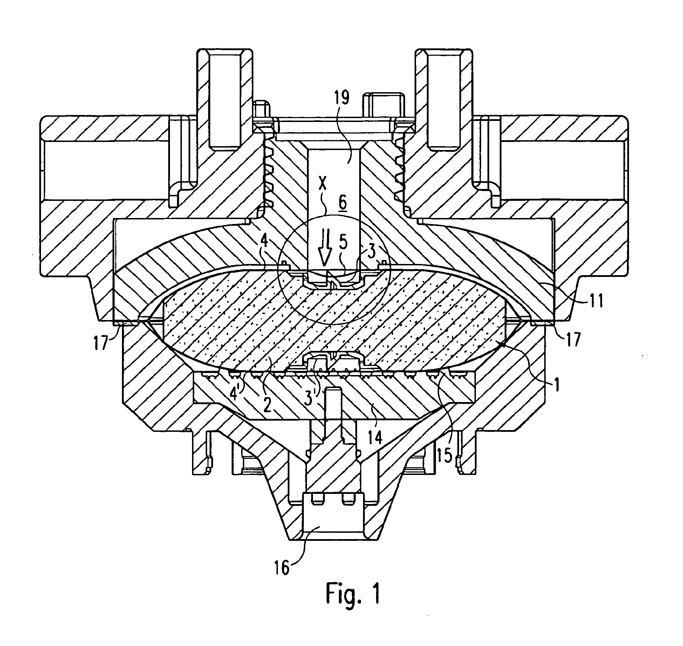

Fig. 1 shows a capsule 1 which is inserted and tightly enclosed by a capsule holder 14 and an upper enclosing member 11 of a beverage producing machine.

The capsule, which is usually still sealed when inserted into the beverage-production device, contains an ingredient 2 for producing a beverage or another liquid comestible.

The upper side of the capsule in figure 1 represents the liquid-inlet side. Once an opening is produced in the upper side of the capsule 1, e.g. water injection means 19 can inject water or other nutritional liquids into the capsule. In the capsule the injected liquid will interact with the ingredient in order to produce a beverage or a liquid comestible.

Once at the outlet side, which is the lower side of the capsule in the example of figure 1, one or more openings are produced, the produced beverage can be drained through a beverage outlet 16 of the beverage producing device.

For illustrative purposes only in the context of the present specification it will be assumed that the beverage-ingredient 2 in the capsule 1 is a coffee ingredient such as for example ground roasted coffee powder. In this case preferably hot water under pressure is injected by the injection means 19.

Note that a huge variety of ingredients can be used, which can differ chemically and physically (e.g. liquids, solid, powders, viscous paste etc.).

As will be explained later on in great detail, in the interior of the capsule 1 in a position close to one of the faces 4, 4', an inner jet direction-diverting member 3, 3' is placed.

Generally, the jet direction-diverting member 3,3' is arranged such that the direction of the injected water jet takes place before the water jet interacts with the beverage ingredients.

The inner jet direction-diverting member 3, 3' can be held in position (close to the associated face of the capsule) by being sandwiched between (e.g. compacted) ingredients and the face, by being mechanically connected to the face or by being an integral piece of the face.

Preferably the inner jet direction-diverting members 3, 3' are made from essentially rigid plastics materials, e.g. formed by injection-moulding.

Preferred materials for the face of the capsule 1 are plastics and/or metal (e.g. aluminum) foils.

Note that preferably there is no difference between the upper face 4 and the lower face 4' of the capsule, such that the outer shape of capsule 1 is symmetrical. The terms "upper face" and "lower face" thus serve for illustrative purposes only and has to be seen in context with the position and orientation of the capsule 1 as shown in figure 1, which is only an example.

Due to the symmetrical shape of the capsule 1, both faces can serve as an inlet side and outlet side, respectively. This is especially advantageous when the capsule is delivered in an automated fashion to the position as shown in Figure 1, i.e. the beverage-production position.

In the following it shall be described as how the capsule 1 as shown in figure 1 can be used in context with the beverage-production device according to the present invention.

At the manufacturing site the sealed capsule 1 is produced having in its interior the preferably compacted ingredient 2 and one or more jet direction-diverting members 3, 3' respectively associated with one face 4, 4' of the capsule.

The user will then insert the sealed capsule into the beverage production machine by placing it on a capsule holder (capsule support) 14.

In the next step, once the capsule is placed on the capsule holder 14, a relative movement between the capsule holder 14 and a closing member 11 will lead to a tight enclosure of the capsule 1 between the enclosing member 11 and the capsule holder 14. This tight engagement (enclosing) can be assisted by dedicated sealing means 17 provided at the contact surface between the enclosing member 11 at the capsule holder 14.

Preferably the capsule 1 is still sealed (i.e. no perforation is produced in the walls defining the capsule) when producing the tight enclosing of the capsule 1.

In a next step, the water injection means 19 of the beverage production device will apply a water pressure on the outer side of the face 4 of the capsule 1, which outer water pressure will cause the area of the face 4 occupied by the water injection means 19 to be deflected towards the interior of the capsule 1.

According to a preferred embodiment, the coffee machine itself does not have mechanical perforation means at the inlet side of the capsule.

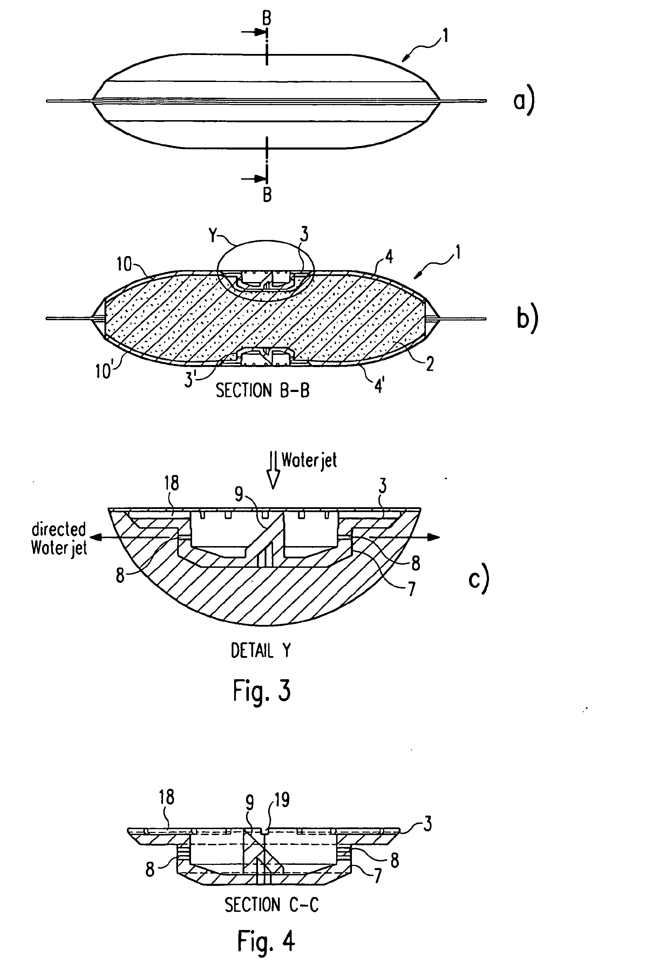

Preferably the capsule 1 is provided with optional rigid inner perforation members 9 (which will be explained later on in context with figure 3), wherein these inner perforation members 9 can e.g. be integrated into the jet-diverting member 3, 3'. Of course, more than one member can be provided in each jet-diverting member to be able to produce more than one opening.

In any case, applying the external water pressure will, preferably assisted by said optional inner perforation means 9, produce an opening at the inlet side 4 of the capsule 1.

A water jet will then be injected into the interior of the capsule 1 through the thus produced opening.

The water injection means 19 will define a main direction for the injected water jet. The water jet diverting member 3, 3' now serve to modify the orientation of the injected water jet and/or split the injected water jet in several sub-jets.

In most of the cases the water injection means 19 will inject the water in a direction perpendicular to the contour of the face 4, 4' of the capsule 1. The jet diverting member 3, 3' now serve to divert this direction (which would otherwise lead straight to the centre of the capsule) in a direction which is no longer perpendicular to the contour of the associated face 4 of the capsule 1. Preferably the jet diverting member 3, 3' are designed to redirect the injected water by an angle of up to 90 degree such that the water jet will continue its path into the interior of the capsule 1 with a substantial radial component.

Preferably the water jet is not only redirected, but also split in several sub-jets.

Details of the mechanical designs able to achieve the redirection of the water injection will be explained later on with reference to figures 3 and 4.

In any case, when the water is injected into the interior of the capsule 1, the pressure inside of the capsule will increase. Preferably according to the invention this pressure increase in the interior of the capsule 1 is used to also produce an opening at the outlet side 4' of the capsule 1. Preferably this opening of the outlet side 4' of the capsule 1 is produced with some delay (corresponding to an increase of the pressure) with reference to the opening of the inlet side 4 of the capsule 1 and the start of the water injection process.

Preferably the increase of the pressure inside the capsule 1 causes the lower face 4' of the capsule 1 to be thrust against perforation means 15 of the beverage-production device. Preferably these perforation means 15 are integral part of the capsule holder 14. The lower face 4' will thus be thrust against the profiling means 15 until the lower face 4' ruptures, breaks or is otherwise open.

As can be seen from this explanation, preferably although a second jet-diverting member 3' is provided at the outlet side 4' of the capsule 1 (in order to have a symmetrical capsule 1), the jet-diverting member 3' (having optionally also an integrated inner perforation member) has no function with regard to the opening of the lower face 4' of the capsule 1 and the draining of a beverage produced from the beverage ingredients 2 contained in the capsule 1.

In any case, once the lower face 4' of the capsule 1 is opened, the beverage can be drained e.g. through channels in the capsule holder 14 to a beverage outlet 16 and then be recovered e.g. in a cup.

Actually there are no separate internal water-distributing means, but optionally water-distributing means in the face of the capsule itself as will be explained now. The water-distributing means in the face of the capsule can already be present in the face before inserting it in the machine, or can be produced dynamically "in situ", i.e. after the capsule is inserted into the beverage-production machine.

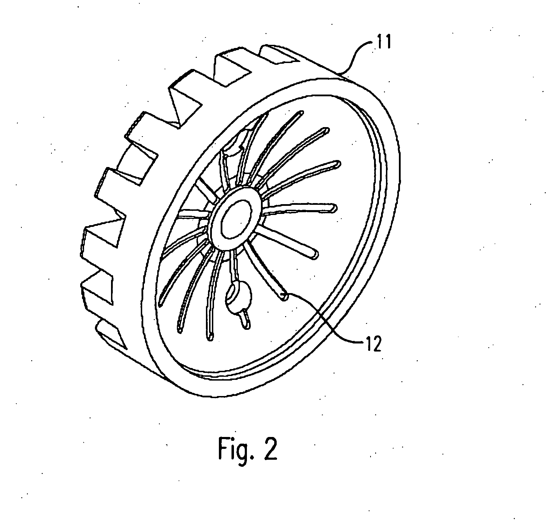

With reference to figure 2 a preferred embodiment for an enclosing member 11 to be used in connection with the present invention will be explained, wherein the enclosing member according to this embodiment assists in the dynamic profiling of inner water-distribution channels produced in the face of the capsule.

As already stated above, inside the capsule and before use of the capsule there are no separate water jet distribution means. In order to assist a proper distribution of the diverted water jet throughout the entire volume of the capsule 1, the wall of the enclosing member 11 which is directed to the capsule 1 can be provided with profiling means 12. These profiling means 12 can e.g. be protruding or recessed portions of the inner contour of the enclosing member 11. The profiling means 12 are preferably arranged radially via-à-vis the centre of the enclosing member 11, which is at the same time in a position of the water injection means 19.

The function of the profiling means 12 of the enclosing member 11 is the following:

As already explained above, the water injection into the capsule 1 will cause the (water) pressure inside the capsule 1 to increase. It has already been explained that the lower face 4' will be thrust against the perforation members 15 of the capsule holder 14. At the same time also the upper surface 4 of the capsule 1, which is the face of the capsule 1 being in contact with the inner contour of the enclosing member 11, will be thrust against the contour of the enclosing member 11.

The faces 4, 4' of the capsule 1 are usually made of a relatively flexible material such as for example a foil made of plastics or metal (for example aluminum). When the thin foil of the upper face 4 of the capsule 1 will be thrust against the profiling means provided in the inner contour of the enclosing member 11, the face 4 will finally match the contour of the enclosing member 11, which means that the face 4 (which has been flat before) will be dynamically (i.e. along with the water pressure increase) profiled thus producing water distribution channels in the face 4 of a capsule 1. As already explained above, these water distribution channels which are dynamically produced in the upper face 4 of the capsule 1 will preferably be oriented in a radial manner starting essentially from the outer rim of the jet diverting member 3, 3' and leading towards the portion of the capsule 1 which is the most remote to the centre. Water injected through the opening of the inlet side 4 of the capsule 1 thus is redirected by the jet diverting member 3, 3' and can then follow the dynamically produced water distribution channels in the upper face 4 of the capsule 1 which guarantees that the injected water will be more or less evenly distributed over the entire surface of the capsule before interacting with the ingredient 2 contained in the capsule 1.

Alternatively the water distribution channels in the upper face 4 of the capsule 1 are at least partially already produced when manufacturing the capsule 1. The water distribution channels can be preformed in the surface of the capsule.

The width of the channels are preferably narrow to prevent ground particles, i.e., coffee particles, to fill and block the channels. The width of the channels can be chosen to be smaller than the average particle size. For instance, the channels may be smaller than or equal to 0.3 mm.

The filter helps to prevent ground particles from entering the channels and it allows to increase the width of the channels with less risk that the channels get blocked by ground particles.

With reference to figure 3 now details of the interior of the capsule 1 will be explained.

As is shown in figure 3b, a filter 10 can be placed between the preferably compacted beverage ingredient 2 in the capsule and the water jet diverting member 3, 3'.

In the region of the water jet diverting member 3, 3' the filter 10 will be sandwiched between the ingredient 2 and the water jet diverting member 3, 3'. In the region of the faces 4, 4' of the capsule 1 outside the water jet diverting members 3, 3' the filter 10 will be sandwiched between the ingredient 2 and the face 4, 4' of the capsule 1. The filter 10 can e.g. be a foil or sheet of porous material such as e.g. filter paper.

With reference to figure 3c now a preferred design for the water jet-diverting member 3, 3' will be explained.

The water jet-diverting member 3 has a cup-shaped main body 7.

Optionally inside the cup-shaped main body 7 an inner perforation member 9 e.g. having the shape of a blade, a needle etc. can be provided.

Water injected in the capsule will thus arrive perpendicularly inside the cup-shaped main body 7 of the jet diverting member 3.

Now, means 8, 18 are provided which will make the water jet leave the cup-shaped main body 7 of the jet diverting member 3 (preferably radially outwards). These means can e.g. be openings or slots 8 in the wall of a cup-shaped main body of the jet diverting member 3 and/or (open) channels 18 provided in the upper flange-like rim of the cup shaped main body 7 of the jet diverting member 3. Note that additionally or alternatively also inclined openings, slots or channels in the bottom of the cup-like main body 7 of the jet diverting member 3 can be provided.

### List of reference signs

- 1: Sealed capsule
- 2: Ingredient
- 3: Jet direction-diverting member
- 4: Upper Face of the capsule
- 4': Lower Face
- 5: Water jet injected into the capsule
- 6: Opening in wall
- 7: Cup-like main body
- 8: Radial openings
- 9: Inner perforation member
- 10: Filter
- 11: Enclosing member
- 12: Profiling means of 11
- 13: Water injection means
- 14: Capsule holder
- 15: Protruding element of capsule holder
- 16: Beverage outlet
- 17: Sealing engagement between enclosing member and capsule holder
- 18: Rim-shaped flange
- 19: Water injection means

## Claims

1. A sealed capsule (1) for containing an ingredient (2),
the capsule (1) being provided with at least one inner jet direction-diverting member (3, 3') being arranged close to the inner surface of a face (4) of the capsule (1),
the inner jet direction-diverting member (3, 3') being designed to divert the direction of at least a portion of a water jet (5) injected through an opening (6) in the face (4) of the capsule (1),
wherein a filter (10) is placed close to the inner surface of the face (4) of the capsule (1),
**characterised in that** the at least one direction-diverting member (3, 3') occupies less than the entire inner surface of the face (4).

2. The capsule (1) according to claim 1,
wherein the jet direction-diverting member (3, 3') is designed to divert the water jet (5) into several, preferably radial jets.

3. The capsule (1) according to any of claims 1 or 2,
wherein the jet direction-diverting member (3, 3') comprises an essentially cup-like main body (7).

4. The capsule (1) according to claim 3,
wherein the jet direction-diverting member (3, 3') comprises radial openings (8), slots or channels in the cup-like main body (7).

5. The capsule (1) according to claim 1 to 4,
wherein the capsule (1) is provided with at least two jet direction-diverting members (3, 3'), which are arranged symmetrically in the capsule (1) and respectively close to the inner surface of one face(4) of opposing faces(4) of the capsule (1).

6. The capsule (1) according to any of the preceding claims,
wherein the at least one direction-diverting member (3, 3') is provided with an inner perforation member (9) designed to assist in producing an opening (6) in the face (4) of the capsule (1).

7. The capsule (1) according to claim 6,
wherein the at least one direction-diverting member (3, 3') occupies less than 1/16, preferably less than 1/20 of the inner surface of the face (4).

8. The capsule (1) according to claim 7,
wherein the direction-diverting member (3, 3') is inserted between the filter and the surface of the wall (4) in the region occupied by the direction-diverting member (3, 3').

9. The capsule (1) according to any of the preceding claims,
wherein a compacted ingredient (2) maintains the direction-diverting member (3, 3') in a defined position adjacent to the inner surface of the face (4).

## Patentansprüche

1. Abgedichtete Kapsel (1) zum Aufnehmen einer Zutat (2);
wobei die Kapsel (1) mit zumindest einem inneren Strahlrichtungs-Umlenkelement (3,3') ausgestattet ist, das nahe der inneren Oberfläche einer Seite (4) der Kapsel (1) angeordnet ist,
wobei das innere Strahlrichtungs-Umlenkelement (3,3') ausgestaltet ist, um die Richtung zumindest eines Teils eines Wasserstrahls (5) umzulenken, der durch eine Öffnung (6) in der Seite (4) der Kapsel (1) eingespritzt wird,
wobei ein Filter (10) nahe der inneren Oberfläche der Seite (4) der Kapsel (1) angeordnet ist,
**dadurch gekennzeichnet, dass** das zumindest eine Richtungs-Umlenkelement (3,3') weniger als die gesamte innere Oberfläche der Seite (4) einnimmt.

2. Kapsel (1) nach Anspruch 1,
wobei das Strahlrichtungs-Umlenkelement (3,3') zum Umlenken des Wasserstrahls (5) in mehrere, vorzugsweise radiale Strahlen ausgeführt ist.

3. Kapsel (1) nach irgendeinem der Ansprüche 1 oder 2,
wobei das Strahlrichtungs-Umlenkelement (3,3') einen im Wesentlichen becherartigen Hauptkörper (7) aufweist.

4. Kapsel (1) nach Anspruch 3,
wobei das Strahlrichtungs-Umlenkelement (3,3') radiale Öffnungen (8), Schlitze oder Kanäle in dem becherartigen Hauptkörper (7) aufweist.

5. Kapsel (1) nach Anspruch 1 bis 4,
wobei die Kapsel (1) mit zumindest zwei Strahlrichtungs-Umlenkelementen (3,3') ausgestattet ist, die symmetrisch in der Kapsel (1) und entsprechend nahe der inneren Oberfläche einer Seite (4) von gegenüberliegenden Seiten (4) der Kapsel (1) angeordnet sind.

6. Kapsel (1) nach irgendeinem der vorstehenden Ansprüche,
wobei das zumindest eine Richtungs-Umlenkelement (3,3') mit einem in neren Perforationselement (9) ausgestattet ist, das zur Unterstützung beim Herstellen einer Öffnung (6) in der Seite (4) der Kapsel (1) ausgeführt ist.

7. Kapsel (1) nach Anspruch 6,
wobei das zumindest eine Richtungs-Umlenkelement (3,3') weniger als 1/16, vorzugsweise weniger als 1/20 der inneren Oberfläche der Seite (4) einnimmt.

8. Kapsel (1) nach Anspruch 7,
wobei das Richtungs-Umlenkelement (3,3') zwischen dem Filter und der Oberfläche der Wand (4) in dem Bereich eingefügt ist, der durch das Strahlrichtungs-Umlenkelement (3,3') eingenommen wird.

9. Kapsel (1) nach irgendeinem der vorstehenden Ansprüche,
wobei eine kompaktierte Zutat (2) das Strahlrichtungs-Umlenkelement (3,3') in einer definierten Position benachbart zu der inneren Oberfläche der Seite (4) hält.

## Revendications

1. Capsule étanche (1) destinée à contenir un ingrédient (2),
la capsule (1) étant dotée d'au moins un élément (3, 3') de déviation de la direction d'un jet interne qui est agencé proche de la surface interne d'une face (4) de la capsule (1),
l'élément (3, 3') de déviation de la direction d'un jet interne étant conçu pour dévier la direction d'au moins une partie d'un jet d'eau (5) injecté à travers une ouverture (6) dans la face (4) de la capsule (1), dans lequel un filtre (10) est placé à proximité de la surface interne de la face (4) de la capsule (1),
**caractérisée en ce que** l'au moins un élément (3, 3') de déviation de la direction d'un jet n'occupe pas toute la surface interne de la face (4),

2. Capsule (1) selon la revendication 1, dans laquelle l'élément (3, 3') de déviation de la direction d'un jet est conçu pour dévier le jet d'eau (5) en plusieurs jets de préférence radiaux.

3. Capsule (1) selon l'une des revendications 1 et 2, dans laquelle l'élément (3, 3') de déviation de la direction d'un jet comprend un corps principal (7) sensiblement en forme de coupelle.

4. Capsule (1) selon la revendication 3, dans laquelle l'élément (3, 3') de déviation de la direction d'un jet comprend des ouvertures (8), fentes ou canaux radiaux dans le corps principal (7) en forme de coupelle.

5. Capsule (1) selon les revendications 1 à 4, dans laquelle la capsule (1) est dotée d'au moins deux éléments (3, 3') de déviation de la direction d'un jet, qui sont agencés de manière symétrique dans la capsule (1) et respectivement proches de la surface interne d'une face (4) de faces opposées (4) de la capsule (1).

6. Capsule (1) selon l'une des revendications précédentes,
dans laquelle l'au moins un élément (3, 3') de déviation de la direction est doté d'un élément (9) de perforation interne conçu pour aider à produire une ouverture (6) dans la face (4) de la capsule (1).

7. Capsule (1) selon la revendication 6, dans laquelle l'au moins un élément (3, 3') de déviation de la direction occupe moins de 1/16, de préférence moins de 1/20, de la surface interne de la face (4).

8. Capsule (1) selon la revendication 7, dans laquelle l'élément (3, 3') de déviation de la direction est inséré entre le filtre et la surface de la paroi (4) dans la région occupée par l'élément (3, 3') de déviation de la direction.

9. Capsule (1) selon l'une des revendications précédentes,
dans laquelle un ingrédient comprimé (2) maintient l'élément (3, 3') de déviation de la direction dans une position définie adjacente à la surface interne de la face (4).
